# FASCICULE DE BREVET EUROPEEN

(11) **EP 1 544 083 B1**
(45) Date de publication et mention de la délivrance du brevet: **14.01.2009**
(21) Numéro de dépôt: 04292849.9
(22) Date de dépôt: 01.12.2004
(51) Int. Cl.: B62D 25/08

(54) **Structure de véhicule rigidifiée par un renfort de porte à faux arrière**
Versteifte Fahrzeugstruktur mit einer hinteren Überhangverstärkung
Stiffened vehicle structure with cantilever reinforcing member

(30) Priorité: 16.12.2003 FR 0314747
(43) Date de publication de la demande: 22.06.2005
(73) Titulaire: Peugeot Citroën Automobiles S.A., 78140 Vélizy Villacoublay (FR)
(72) Inventeur: Schmitt, Jean-Charles, 90000 Belfort (FR)

(56) Documents cités:
- WO-A-02/070322
- WO-A-03/070543
- US-A- 2 389 907
- US-A- 4 428 599
- PATENT ABSTRACTS OF JAPAN vol. 1998, no. 14, 31 décembre 1998 (1998-12-31) & JP 10 230868 A (YAMAHA MOTOR CO LTD), 2 septembre 1998 (1998-09-02)

## Description

La présente invention est relative à l'ossature arrière d'un véhicule automobile comportant un soubassement s'étendant en porte à faux vers l'arrière du véhicule au-delà de la zone d'appui de la caisse du véhicule sur l'essieu arrière.

La caisse d'un véhicule automobile, et en particulier d'un véhicule automobile du type « tri-corps », comporte à l'avant un compartiment moteur, au milieu un habitacle et à l'arrière un bloc arrière ou malle arrière. Cette caisse est constituée d'une part d'un soubassement, et d'autre part d'une ossature d'habitacle. Le soubassement est constitué notamment de deux longerons s'étendant depuis le bloc moteur jusqu'à la partie arrière de l'habitacle et se prolonge sous la malle arrière par deux longeronnets. L'ossature d'habitacle est une structure complexe qui comporte, notamment dans la partie latérale arrière et de chaque côté, deux doublures de custode qui s'étendent depuis les longerons vers la partie supérieure de l'habitacle. La jonction entre l'habitacle et le bloc arrière correspond à peu près à la zone dans laquelle la caisse s'appuie sur l'essieu arrière du véhicule. De ce fait, les longeronnets qui supportent le bloc arrière sont en porte à faux. Lorsque le porte à faux est important et lorsque la zone arrière doit supporter des charges importantes, en particulier lorsque le véhicule tracte une remorque, les longeronnets sont soumis à des couples importants qui tendent à les faire basculer vers le bas par un effet dit effet « sac à dos ». Ce basculement des longeronnets, présente l'inconvénient d'affecter le comportement routier du véhicule.

Afin de limiter cet inconvénient, on dispose dans le bloc arrière du véhicule des tirants destinés à accrocher les longeronnerets à l'ossature de l'habitacle. Ces tirants, installés après le montage de la caisse du véhicule, sont constitués de barres métalliques dont les extrémités sont vissées d'une part dans le longeronnet et d'autre part dans l'ossature de l'habitacle du véhicule. Ces tirants rapportés présentent plusieurs inconvénients, d'une part ils prennent de la place à l'intérieur du coffre et diminuent la place disponible, d'autre pat ils présentent une gêne rendant difficilement accessible certaines zones de montage ou de démontage d'équipements tels que, par exemple, les feux arrières du véhicule.

Du fait de la gêne qu'ils occasionnent pour le montage ou démontage des feux arrières, lors de l'entretien du véhicule on est amené à dévisser les tirants. Comme ces tirants ne semblent pas à priori indispensables, la personne qui les a démontés peut être incitée à ne pas les remonter après avoir remplacé les feux arrière. Or il résulte de l'absence de tirants, une détérioration de la qualité routière du véhicule qui n'apparaît pas immédiatement. Le fait que les tirants soient démontables et que leur démontage soit nécessaire lors de certaines opérations d'entretien est un inconvénient qui tend à réduire la fiabilité du véhicule. En outre, les tirants rapportés encombrent le coffre et réduisent son volume utile.

Ainsi, on connaît par WO03/070543 une ossature arrière de véhicule automobile, conformément au préambule de la revendication 1, comportant un tube de section fermée liant le panneau de Custode à un longeronnet qui est encombrante.

Le but de la présente invention est de remédier à cet inconvénient en proposant une ossature arrière de véhicule qui supporte convenablement un bloc arrière en porte à faux, qui permette les opérations de montage et d'entretien sans avoir à être démontée et qui ne réduit pas la place disponible dans le coffre.

A cet effet l'invention a pour objet un ossature arrière de véhicule du type comprenant une ossature d'habitacle et un soubassement s'étendant en porte à faux vers l'arrière du véhicule, au-delà de la zone d'appui de la caisse du véhicule sur l'essieu arrière du véhicule, comprenant en outre au moins une membrure de liaison entre une partie supérieure de l'ossature d'habitacle et une partie du soubassement en porte à faux, ladite membrure s'étendant dans le prolongement et en continuité de l'ossature de l'habitacle. Au moins une membrure de liaison constitue un prolongement d'une doublure de custode de l'ossature de l'habitacle et constitue une fermeture d'aile arrière comportant une tête généralement triangulaire présentant une zone de liaison avec une doublure de custode, et prolongée par un bras destiné à coopérer avec un longeronnet, de préférence perpendiculairement au longeronnet.

De préférence le soubassement se prolongeant vers l'arrière du véhicule comporte au moins un longeronnet, et au moins une membrure de liaison coopère avec un longeronnet.

La membrure de liaison constitue par exemple une fermeture d'aile arrière rendue solidaire de l'ossature de l'habitacle par des moyens de fixation permanents tels que des soudures ou des rivets.

La membrure de liaison peut en outre, comporter des moyens de guidage pour des outils utilisés lors de montage ou de démontage de pièces de la partie arrière du véhicule.

De préférence, la tête généralement triangulaire de la fermeture d'aile arrière comporte une ouverture centrale dont le bord présente au moins une encoche destinée à guider un outil.

Le véhicule est par exemple de type « tri-corps ».

L'invention va maintenant être décrite plus en détails mais de façon non limitative, en regard des figures annexées dans lesquelles :
- la figure 1 est une vue partielle de l'ossature arrière d'un véhicule automobile, selon un premier mode de réalisation.
- la figure 2 est une vue partielle de l'ossature arrière d'un véhicule automobile selon un deuxième mode de réalisation,
- la figure 3 est une vue en perspective partielle de la structure du bloc arrière d'un véhicule automobile.

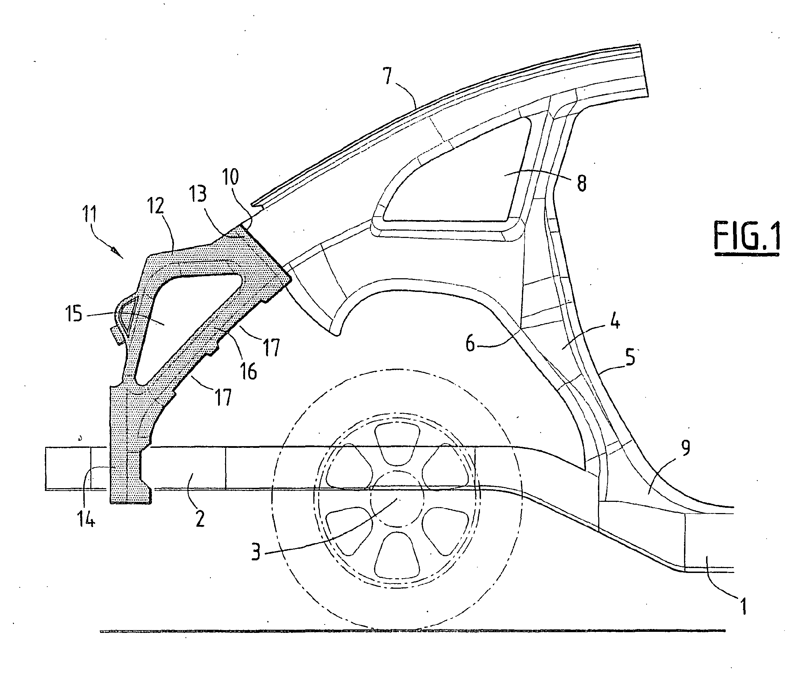

L'ossature de la caisse d'un véhicule automobile représentée à la figure 1 comporte un soubassement constitué notamment de deux longerons 1 parallèles prolongés vers la partie arrière du véhicule par deux longeronnets 2 (sur les figures un seul longeron et un seul longeronnet sont visibles).

Les jonctions entre chaque longeronnet 2 et chaque longeron 1 se situent aux voisinages de l'aplomb de l'axe de rotation 3 de la roue arrière, c'est à dire à peu près au droit de l'essieu arrière du véhicule.

Chaque partie latérale arrière de l'ossature de l'habitacle est constituée d'une doublure de custode 4 (une seule visible sur la figure) qui est supportée d'une part par le longeron 1, et qui s'élèvent au dessus du soubassement de la caisse de véhicule.

La doublure de custode 4, est une pièce connue en elle-même et de forme complexe dont un bord 5, délimite partiellement la zone de fermeture de la portière arrière du véhicule, un bord 6, délimite partiellement l'aile arrière du véhicule, et un bord 7, correspond à la zone de raccordement avec le pavillon du véhicule. La doublure de custode 4, peut comporter une ouverture 8, de forme généralement triangulaire et destinée à recevoir une vitre de custode. La doublure de custode 4, qui est fixée par sa partie inférieure 9, au longeron 1 comporte une extrémité arrière 10, se situant à peu près au niveau de la partie supérieure de la malle arrière (non représentée) du véhicule et dans le prolongement du bord 7 de raccordement avec le pavillon.

Afin d'assurer la liaison entre la doublure de custode 4 et le longeronnet 2, une membrure repérée généralement par 11 est disposée entre l'extrémité arrière 10 de la doublure de custode 4 et le longeronnet 2, de façon à constituer une fermeture d'aile arrière. Cette membrure 11 ou fermeture d'aile arrière, comporte une tête généralement triangulaire 12 présentant une zone de liaison 13 avec l'extrémité arrière 10 de la doublure de custode 4, et comportant également un bras 14 destiné à coopérer avec le longeronnet 2. Dans la zone de liaison 13 avec l'extrémité 10 de la doublure de custode 4, la fermeture de l'aile arrière est soudée ou rivetée sur la doublure de custode. De même le bras 14 est fixé au longeronnet 2 de façon permanente. La membrure 11 assure donc la liaison entre une partie supérieure 10 de l'ossature d'habitacle et une partie du soubassement en porte à faux constituée par le longeronnet 2.

La tête triangulaire 12 de la membrure 11 comporte une ouverture triangulaire 15 qui peut servir comme on le verra plus loin à faire passer des outils pour visser des composants de la carrosserie du véhicule au montage de celui-ci ou pour les dévisser et les revisser lors d'opérations d'entretien. Une bordure 16 de la tête triangulaire 12 comporte sur sa partie extérieure, deux échancrures 17 qui sont destinées à guider des outils de montage et démontage de pièces de la partie arrière du véhicule. Ces outils de montage ou démontage sont par exemple des visseuses ou dévisseuses et la forme des échancrures 17 est adaptée à la forme des visseuses ou dévisseuses de façon à ce que ces outils viennent s'adapter précisément dans les échancrures et se positionner convenablement de façon à pouvoir visser ou dévisser des vis disposées dans des zones peu accessibles de l'arrière du véhicule.

La forme de la membrure 11 est adaptée de façon à ce que cette membrure disposée dans la structure arrière du véhicule, vienne en continuité dans le prolongement de la doublure de custode 4 et d'autre part viennent coopérer avec le longeronnet 2 perpendiculairement à celui-ci, de façon à reprendre les couples de flexion du longeronnet sans engendrer de cisaillement dans les liaisons entre les pièces, c'est-à-dire dans la zone de liaison 13 et dans la liaison entre le bras 14 et le longeronnet 2.

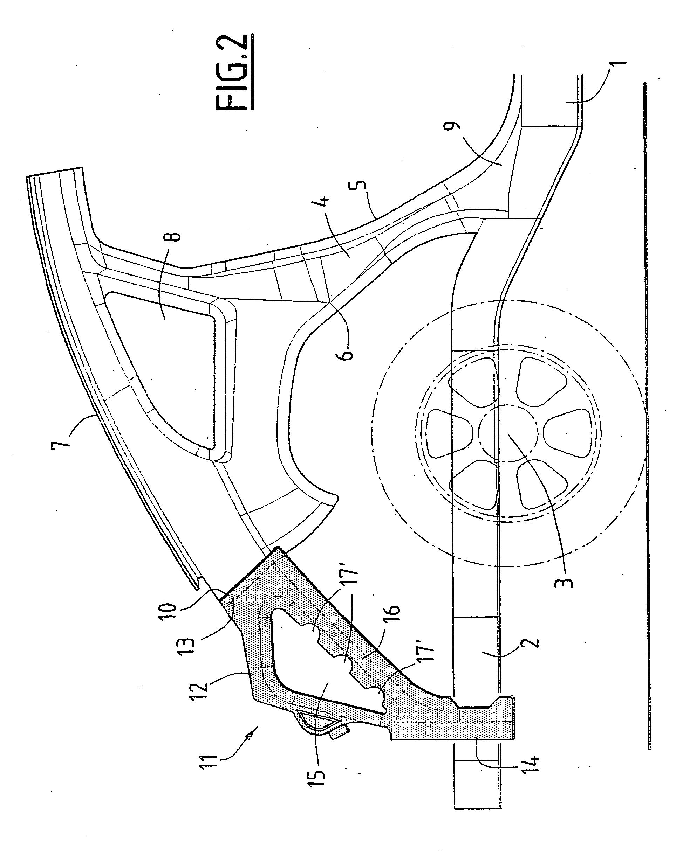

Dans un deuxième mode de réalisation, représenté à la figure 2, la membrure a généralement la même forme que celle qui vient d'être décrite, cependant les moyens de guidage pour les outils sont des échancrures 17' en forme de demi-cercle et disposées sur le bord 16 de la tête triangulaire 12, mais sur la bordure interne, c'est-à-dire à l'intérieure de l'ouverture 15.

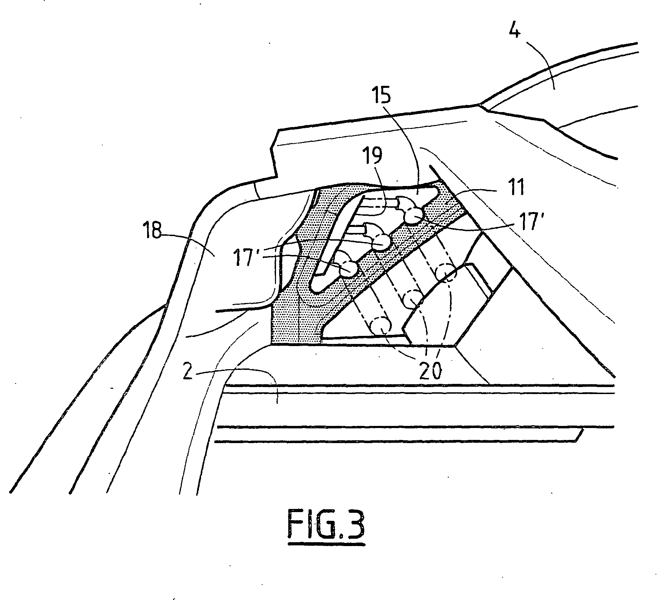

Comme on le voit à la figure 3, la membrure 11 disposée dans le prolongement de la doublure de custode 4, vient coopérer avec le longeronnet 2 et est entourée par le panneau arrière 18. Le panneau 18 et la membrure 11 délimitent un espace 19 ne s'ouvrant que vers l'intérieur du véhicule. A l'intérieur de cet espace 19 se trouvent divers composants, comme par exemple les feux arrières du véhicule, qu'il est nécessaire de pouvoir visser alors que cet espace 19 est peu accessible et disposé dans une position opposée au champ de vision de l'opérateur qui doit faire ces opérations lors du montage du véhicule ou lors d'opération d'entretien. Pour visser ces dispositifs à l'intérieur de l'espace 19, l'opérateur utilise des visseuses 20 qui comportent une partie coudée permettant de pénétrer à l'intérieure de l'espace 19. Afin de faciliter le travail de l'opérateur, les visseuses 20 viennent se positionner dans les échancrures 17' (ou 17 dans le cas du mode de réalisation représenté à la figure 1) de l'ouverture 15 de la membrure 11 et ainsi sont pré-positionnées, ce qui permet à l'opérateur de les orienter facilement et rapidement dans la position nécessaire pour assurer un vissage ou un dévissage. Ainsi ces membrures 11 qui sont montées dans l'ossature du véhicule au moment de la fabrication de cette ossature n'ont pas besoin d'être démontées pour pouvoir intervenir à l'intérieur de l'espace 19. En outre, par leur forme, elles maximisent l'espace disponible dans la malle arrière du véhicule et d'autre part minimisent les efforts dans les zones de liaisons avec le reste de l'ossature du véhicule, ce qui répartit sensiblement les sollicitations en fatigue et donc améliore la durée de vie de l'ossature.

La forme de la membrure 11 peut être différente de celle qui vient d'être décrite, en particulier pour être adaptée à des structures particulières de véhicule. L'essentiel est que la membrure soit une partie intégrante de l'ossature du véhicule qui soit en prolongement et en continuité de l'ossature latérale de l'habitacle, et qui vienne coopérer avec le longeronnet le plus loin possible vers l'arrière de façon à le soutenir au mieux, et que cette membrure laisse un espace pour le passage des outils de montage ou de démontage et dispose de moyens tels que des échancrures permettant de pré-positionner ces outils de montage ou de démontage.

Enfin, il est clair que l'ossature du véhicule comprend deux parties latérales, une de chaque côté, et qu'en conséquence l'ossature comprend en général deux membrures de liaison symétriques par rapport au plan de symétrie longitudinal du véhicule.

## Revendications

1. Ossature arrière de véhicule du type comprenant une ossature d'habitacle et un soubassement s'étendant en porte à faux vers l'arrière du véhicule, au-delà de la zone d'appui de la caisse du véhicule sur l'essieu arrière du véhicule, comprenant, en outre au moins une membrure de liaison (11) entre une partie supérieure (10) de l'ossature d'habitacle et une partie du soubassement (2) en porte à faux, ladite membrure s'étendant dans le prolongement et en continuité de l'ossature d'habitacle, l'ossature d'habitacle comprenant au moins une doublure de custode (4) et au moins une membrure de liaison (11) constituant un prolongement en conformité de la partie supérieure d'une doublure de custode (4),
**caractérisée en ce que** l'au moins une membrure de liaison (11) qui constitue un prolongement d'une doublure de custode (4) est une fermeture d'aile arrière comportant une tête généralement triangulaire présentant une zone de liaison (13) avec une doublure de custode (4), et prolongée par un bras (14) destiné à coopérer avec un longeronnet (2).

2. Ossature arrière de véhicule selon la revendication 1, **caractérisée en ce que** le soubassement se prolongeant vers l'arrière du véhicule comporte au moins un longeronnet (2) et **en ce que** au moins une membrure de liaison (11) coopère avec un longeronnet (2).

3. Ossature arrière de véhicule selon la revendication 2, **caractérisée en ce que** la membrure de liaison (11) constitue une fermeture d'aile arrière rendue solidaire de l'ossature d'habitacle par des moyens de fixation permanents tels que des soudures ou des rivets.

4. Ossature arrière de véhicule selon l'une quelconque des revendications 1 à 3, **caractérisée en ce que** la membrure de liaison (11) comporte en outre des moyens de guidage (17 ;17') pour des outils utilisés lors du montage ou du démontage de pièces de la partie arrière du véhicule.

5. Ossature de véhicule selon l'une quelconque des revendications 1 à 4, **caractérisée en ce que** la tête généralement triangulaire (12) de la fermeture d'aile arrière (11) comporte une ouverture centrale (15) dont un bord (16) présente au moins une encoche (17) destinée à guider un outil.

6. Ossature de véhicule selon l'une quelconque des revendications 1 à 5, **caractérisée en ce que** le véhicule comprend une porte à faux arrière important, tel qu'un véhicule de type « tri-corps ».

## Claims

1. Vehicle rear framework of the type comprising a passenger compartment framework and a sub frame extending as a rear overhang toward the rear of the vehicle, beyond the region in which the vehicle body rests on the rear axle of the vehicle, further comprising at least one connecting member (11) connecting an upper part (10) of the passenger compartment framework and an overhanging sub frame part (2), the said member extending in the extension and continuation of the passenger compartment framework, the passenger compartment framework comprising at least one quarter panel lining (4) and at least one connecting member (11) constituting an extension in register with the upper part of a quarter panel lining (4),
**characterized in that** the at least one connecting member (11) which constitutes an extension of a quarter panel liner (4) is a member that closes off the rear wing, comprising a generally triangular top having a region (13) for connection to a quarter panel liner (4) and extended by an arm (14) intended to collaborate with an auxiliary side member (2).

2. Vehicle rear framework according to Claim 1, **characterized in that** the sub frame that extends towards the rear of the vehicle comprises at least one auxiliary side member (2) and **in that** at least one connecting member (11) collaborates with an auxiliary side member (2).

3. Vehicle rear framework according to Claim 2, **characterized in that** the connecting member (11) is a member that closes of the rear wing and is secured to the passenger compartment framework by permanent means of attachment such as welds or rivets.

4. Vehicle rear framework according to any one of claims 1 to 3, **characterized in that** the connecting member (11) further comprises guide means (17; 17') for tools used when fitting or removing components of the rear part of the vehicle.

5. Vehicle framework according to any one of Claims 1 to 4, **characterized in that** the generally triangular top (12) of the member that closes off the rear wing (11) comprises a central opening (15) of which one edge (16) has at least one notch (17) intended for guiding a tool.

6. Vehicle framework according to any one of Claims 1 to 5, **characterized in that** the vehicle has a substantial rear overhang and is, for example, a vehicle of the "three-box" or "notchback" design.

## Patentansprüche

1. Fahrzeugheckstruktur des Typs, der eine Fahrgastraumstruktur und eine Wagenunterseite aufweist, die sich zur Rückseite des Fahrzeugs hin auskragend über die Auflagezone der Karosserie des Fahrzeugs hinaus auf der Hinterachse des Fahrzeugs erstreckt, und ferner mindestens eine Verbindungsrippe (11) zwischen einem oberen Teil (10) der Fahrgastzellenstruktur und einem Teil der auskragenden Wagenunterseite (2) aufweist, wobei sich die Rippe in der Verlängerung und Kontinuität der Fahrgastzellenstruktur erstreckt, wobei die Fahrgastzellenstruktur mindestens eine Auskleidung (4) des Karosserieteils über dem Hinterrad aufweist und mindestens eine Verbindungsrippe (11), die eine Verlängerung in Übereinstimmung mit dem oberen Teil einer Auskleidung 4 des Karosserieteils über dem Hinterrad bildet,
**dadurch gekennzeichnet, dass** die mindestens eine Verbindungsrippe (11), die ein Verlängerung einer Auskleidung (4) des Karosserieteils über dem Hinterrad bildet, ein Heckflügelverschluss ist, der einen allgemein dreieckigen Kopf aufweist, der eine Verbindungszone (13) mit einer Auskleidung (4) für Karosserieteil über dem Hinterrad aufweist und von einem Arm (14) verlängert wird, der dazu bestimmt ist, mit einem kleinen Längsbalken (2) zusammenzuwirken.

2. Fahrzeugheckstruktur nach Anspruch 1, **dadurch gekennzeichnet, dass** die Wagenunterseite, die sich zur Rückseite des Fahrzeugs verlängert, mindestens einen kleinen Längsbalken (2) aufweist, und dass mindestens eine Verbindungsrippe (11) mit einem kleinen Längsbalken (2) zusammenwirkt.

3. Fahrzeugheckstruktur nach Anspruch 2, **dadurch gekennzeichnet, dass** die Verbindungsrippe (11) einen Heckflügelverschluss bildet, der mit der Fahrgastzellenstruktur durch fixe Befestigungsmittel, wie zum Beispiel Schweißungen oder Nieten fest verbunden ist.

4. Fahrzeugheckstruktur nach einem der Ansprüche 1 bis 3, **dadurch gekennzeichnet, dass** die Verbindungsrippe (11) ferner Führungsmittel (17; 17') für Werkzeuge aufweist, die bei der Montage oder Demontage der Teile des Heckteils des Fahrzeugs verwendet werden.

5. Fahrzeugstruktur nach einem der Ansprüche 1 bis 4, **dadurch gekennzeichnet, dass** der allgemein dreieckige Kopf (12) des Heckflügelverschlusses (11) eine zentrale Öffnung (15) aufweist, von der ein Rand (16) mindestens eine Kerbe (17) aufweist, die dazu bestimmt ist, ein Werkzeug zu führen.

6. Fahrzeugstruktur nach einem der Ansprüche 1 bis 5, **dadurch gekennzeichnet, dass** das Fahrzeug eine starke Heckauskragung aufweist, wie zum Beispiel ein Fahrzeug des Typs mit "Stufenheck".
